(19) **Europäisches Patentamt**

**European Patent Office**

**Office européen des brevets**

(11) **EP 1 042 656 B1**

(12) **EUROPÄISCHE PATENTSCHRIFT**

(45) Veröffentlichungstag und Bekanntmachung des Hinweises auf die Patenterteilung:
**09.07.2003 Patentblatt 2003/28**

(51) Int Cl.$^7$: **G01K 13/00**

(21) Anmeldenummer: **98963521.4**

(86) Internationale Anmeldenummer:
**PCT/EP98/07665**

(22) Anmeldetag: **27.11.1998**

(87) Internationale Veröffentlichungsnummer:
**WO 99/034180 (08.07.1999 Gazette 1999/27)**

(54) **TEMPERATURBERECHNUNGSVERFAHREN FÜR STRAHLUNGSTHERMOMETER**

METHOD FOR TEMPERATURE CALCULATION FOR A RADIATION THERMOMETER

PROCEDE DE CALCUL DE TEMPERATURE DESTINE A UN THERMOMETRE A RAYONNEMENT

(84) Benannte Vertragsstaaten:
**AT BE CH CY DE DK ES FI FR GB GR IE IT LI LU MC NL PT SE**

(30) Priorität: **23.12.1997 DE 19757447**

(43) Veröffentlichungstag der Anmeldung:
**11.10.2000 Patentblatt 2000/41**

(73) Patentinhaber: **Braun GmbH Kronberg (DE)**

(72) Erfinder:
• **KRAUS, Bernhard D-35619 Braunfels (DE)**
• **KAISER, Manfred D-61184 Karben (DE)**

(56) Entgegenhaltungen:
**EP-A- 0 337 724          SE-A- 7 811 861
US-A- 4 784 149**

• **PATENT ABSTRACTS OF JAPAN vol. 098, no. 007, 31. März 1998 -& JP 08 015036 A (KOREA STANDARDS RES INST), 19. Januar 1996**
• **PATENT ABSTRACTS OF JAPAN vol. 005, no. 196 (P-093), 12. Dezember 1981 -& JP 56 119824 A (FUJITSU LTD), 19. September 1981**
• **"OPTICAL SYSTEM" RESEARCH DISCLOSURE, Nr. 331, 1. November 1991, Seite 867 XP000271518**

**Beschreibung**

Die Erfindung betrifft ein Verfahren zur Berechnung der Strahlungstemperatur eines Körpers aus den Signalen eines Strahlungs- und eines Umgebungstemperatursensors sowie ein Strahlungsthermometer, insbesondere ein Strahlungsfieberthermometer.

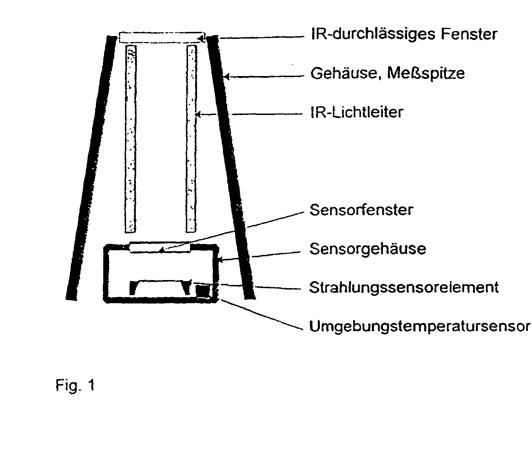

Als Beispiel ist in Fig. 1 eine Meßspitze eines Strahlungsfieberthermometers mit einer einfachen Infrarotoptik schematisch dargestellt. Sie weist ein IR-durchlässiges Fenster auf, das am vorderen Ende eines Gehäuses angeordnet ist, und hinter dem sich ein IR-Lichtleiter ins Innere der Meßspitze erstreckt. Das Strahlungsfieberthermometer weist ferner in einem Sensorgehäuse einen Umgebungstemperatursensor und einen Strahlungssensor auf sowie ein in Fig. 1 nicht dargestelltes Rechenwerk. Zur Bestimmung der Körpertemperatur wird das vordere Ende dieser Optik in das Ohr gerichtet. Vom Trommelfell und Ohrkanal emittierte Infrarotstrahlung tritt in diesem Beispiel durch das Fenster, den Lichtleiter und ein Sensorfenster in das Sensorgehäuse ein und trifft dort auf den Strahlungssensor. Die dadurch im Sensor hervorgerufene partielle Temperaturerhöhung hat eine elektrische Ausgangsspannung zur Folge. Da die Höhe dieser Ausgangsspannung auch von der Umgebungstemperatur - bzw. einer Referenztemperatur - abhängt, wird diese Temperatur durch einen entsprechenden Umgebungstemperatursensor ermittelt. Weiterhin ist das Sensorsignal von den optischen Eigenschaften der verwendeten Fenster, des Lichtleiters sowie eventuell verwendeter Filter oder Schutzkappen abhängig.

Die von einem Körper absorbierte bzw. emittierte spektrale Strahlungsintensität ergibt sich bekanntermaßen aus dem Planck'schen Strahlungsgesetz:

$$I(T,\lambda) = h_1 \varepsilon(\lambda) \frac{1}{\lambda^5} \frac{1}{e^{\frac{h_2}{\lambda T}} - 1} \tag{1}$$

Dabei ist

$T$ absolute Temperatur
$h_1, h_2$ Konstanten
$\lambda$ Wellenlänge
$\varepsilon(\lambda)$ Emissivität bzw. Absorptionsgrad des Körpers

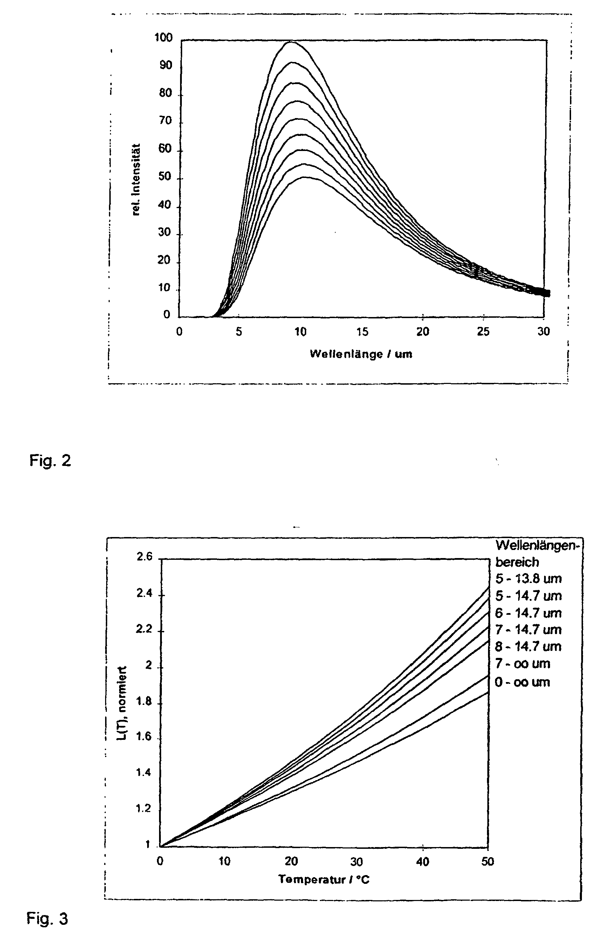

Zur Veranschaulichung ist die relative Strahlungsintensität eines schwarzen Strahlers, d. h. $\varepsilon(\lambda) = 1$, für verschiedene Strahlungstemperaturen (5, 10, ... 45 °C) als Funktion der Wellenlänge in Fig. 2 dargestellt.

Zur Bestimmung der gesamten von einem Strahlungssensor absorbierten Strahlungsleistung integriert man (Gl. 1) über den gesamten Wellenlängenbereich. Dabei wird die Transmission der optischen Komponenten und der Absorptionsgrad des Sensors berücksichtigt:

$$L(T) \sim \int_0^\infty \varepsilon(\lambda)\tau(\lambda)s(\lambda) \frac{1}{\lambda^5} \frac{1}{e^{\frac{c_1}{\lambda T}} - 1} d\lambda \tag{2}$$

wobei:

$\varepsilon(\lambda)$ Emissivität des strahlenden Körpers
$\tau(\lambda)$ Transmission der optischen Komponenten
$s(\lambda)$ wellenlängenabhängiger Anteil der Sensorempfindlichkeit

Zur Lösung dieses Integrals werden oft ideale Bedingungen angenommen. Im Falle eines schwarzen Strahlers ($\varepsilon(\lambda) = 1$), idealer optischer Komponenten ($\tau(\lambda) = 1$) und idealer Sensorempfindlichkeit ($s(\lambda) = 1$), ergibt sich durch Integration von Gleichung 2 das Stefan Boltzmann Gesetz:

$$L(T) \sim T^4 \tag{3}$$

Insbesondere bei Verwendung von optischen Filtern, die oft zur Ausblendung von unerwünschten Wellenlängenbereichen eingesetzt werden, ist die Boltzmann Gleichung nicht mehr anwendbar. Als Beispiel für verschiedene nichtideale Transmissionen ist in Fig. 3 das Integral L(T), normiert auf L(T=0°C) = 1, für verschiedene Wellenlängenbereiche dargestellt. In diesem Fall wurde $\varepsilon(\lambda) * \tau(\lambda) * s(\lambda) = 1$ für $\lambda_1 < \lambda < \lambda_2$ und $\varepsilon(\lambda) * \tau(\lambda) * s(\lambda) = 0$ für $\lambda < \lambda_1$ oder $\lambda_2 < \lambda$ betrachtet. Dies entspricht näherungsweise der Verwendung von verschiedenen optischen Filtern. Der Wellenlängenbereich 0 - ∞ µm entspricht dem Stefan-Boltzmann-Gesetz $L(T) \sim T^4$.

Zur Bestimmung des Ausgangssignals eines Strahlungssensors müssen zum einen die Transmission der optischen Komponenten (Schutzkappen, Fenster, Lichtleiter, Filter, ...) und die Sensorempfindlichkeit berücksichtigt werden. Zum anderen muß von der vom Sensor empfangenen Strahlungsleistung die emittierte Strahlungsleistung subtrahiert werden. Damit ergibt sich das Sensorsignal zu

$$U = S[L(T_S) - L(T_U)] \tag{4}$$

wobei:

$S$ Empfindlichkeit des Strahlungssensors
$T_U$ Temperatur des Strahlungssensors (Umgebungstemperatur)
$T_S$ Temperatur des Meßobjekts

Zur Bestimmung der Strahlungstemperatur aus dem Ausgangssignal des Strahlungssensors, ist neben L(T) auch die Kenntnis der Umkehrfunktion T(L) notwendig. Aus Gleichung 4 ergibt sich

$$L(T_S) = \frac{U}{S} + L(T_U) \tag{5}$$

Im Spezialfall eines idealen schwarzen Strahlers, idealer optische Komponenten und idealer Sensorempfindlichkeit $\varepsilon(\lambda) = \tau(\lambda) = s(\lambda) = 1$ ergibt sich mit Gleichung 3

$$T_S = \sqrt[4]{\frac{U}{S} + T_U^4} \tag{6}$$

Bei Verwendung dieser Gleichung im nichtidealen Fall (also immer) erhält man entsprechende Fehler (vgl. Fig. 3). Daher werden häufig Näherungsverfahren verwendet:

a) Eine Möglichkeit zur Berechnung der Strahlungstemperatur ist die direkte Verwendung von Gleichung 6. Beispielsweise gibt Fraden (US-A-4 797 840) diese Gleichung an, wobei er den temperaturabhängigen Parameter S durch ein Polynom ersetzt.
Wie bereits diskutiert, kann diese Gleichung nur benutzt werden, wenn die optischen Komponenten dem idealen Fall relativ nahe kommen, oder wenn Umgebungstemperaturund Strahlungstemperaturbereich stark eingeschränkt sind. Andernfalls ergeben sich relativ große Temperaturfehler. Ein weiterer Nachteil dieser Formel ist die Notwendigkeit zur Berechnung der vierten Wurzel. Da die in Ohrthermometern verwendeten einfachen Microcomputer diese Berechnung nicht direkt durchführen können, sind beispielsweise aufwendige iterative Verfahren notwendig. Einfacher, aber auch ungenauer sind Näherungsverfahren die mit Hilfe von Tabellen oder Reihenentwicklungen arbeiten.

b) Um die Berechnung der vierten Wurzel in Gleichung 6 zu vermeiden, können Formeln verwendet werden, in denen die Umgebungstemperatur und die Strahlungstemperatur in verschiedenen Potenzen vorkommen. Beispielsweise gibt Goldberg (US-A-5 150 969) folgende Gleichungen an:

$$T_S = c + \sum_{i=1}^{n} A_i U^i + \sum_{i=1}^{n} B_i T_U^i \qquad (7\text{-}1)$$

$$T_S = k_0 + c + k_1 + G_1 \sum_{i=1}^{n} A_i G_0^i U' + G_2 \sum_{i=1}^{n} B_i T_U^i \qquad (7\text{-}2)$$

Die verwendeten Parameter $c$, $k_0$, $k_1$, $G_0$, $G_1$, $G_2$, $A_i$ und $B_i$ müssen bei der Kalibrierung bestimmt werden (oder werden konstant gesetzt). Im einfachsten Fall wird in Gleichung 7.1 $n=1$ gesetzt, so daß nur lineare Terme bleiben. Da in diesen Gleichungen gemischte Terme $U^i \cdot T^k$ fehlen, kann damit Gleichung 5 bzw. auch Gleichung 6 prinzipiell nicht besonderes gut angenähert werden. Die Verwendung von sehr vielen Parametern ändert dies nur bedingt, erhöht aber den Aufwand insbesondere bei der Kalibrierung erheblich, da diese Parameter für jedes Thermometer einzeln bestimmt werden müssen.

c) Ein weiteres Verfahren wird von O'Hara et al. (US-A-5 293 877) unter der Bezeichnung "Calibration Mapping" angegeben. Bei diesem werden 13 Terme, die mit jeweils einem Parameter a, multipliziert werden, aufsummiert. Dabei sind im Gegensatz zu den Gleichungen 7-1 und 7-2 auch Mischterme vorhanden, in denen sowohl U als auch Tu vorkommt. Weiterhin wird auch die Temperatur des Lichtleiters berücksichtigt.
Die Berechnung der Strahlungstemperatur ist relativ aufwendig. Besonders aufwendig gestaltet sich die kalibrierung der einzelnen Thermometer, bei der die einzelnen Parameter bestimmt werden.

d) Ein Verfahren, das speziell bei der Verwendung von optischen Filtern vorteilhaft sein soll, wird von Egawa et al. (EP-A-0 337 724) vorgeschlagen. Die Funktion L(T) wird dabei angenähert durch (vgl. Gleichung 3 oben):

$$L(T) = a(T - b)^4 + c \qquad (7\text{-}3)$$

Damit erhält man für die Strahlungstemperatur:

$$T_S = \sqrt[4]{\frac{U}{S} + (T_U - b)^4} + b \qquad (7\text{-}4)$$

Der im Vergleich zu Gleichung 6 zusätzliche Parameter b wird dabei in Abhängigkeit vom verwendeten optischen Filter angepaßt.
Durch den Parameter kann zwar die Genauigkeit der Berechnung verbessert werden; wegen der Verwendung der prinzipiell ungenauen Gleichung 6 und der Korrektur durch nur einen Parameter ist diese Verbesserung jedoch nur begrenzt. Weiterhin bleibt die Notwendigkeit bestehen, die vierte Wurzel zu berechnen.

Es ist Aufgabe der vorliegenden Erfindung, ein Verfahren für die genaue und einfache Berechnung von Strahlungstemperaturen anzugeben, das auch die optischen Eigenschaften eines Strahlungsthermometers im relevanten Wellenlängenbereich berücksichtigen kann.
Beim erfindungsgemäßen Verfahren erfolgt die Berechnung der Temperatur nicht nach Gleichung 3, sondern es wird ein Polynom, vorzugsweise ein Polynom dritten Grades, verwendet, dessen Parameter an die strahlungsoptischen Eigenschaften des Thermometers im relevanten Wellenlängenbereich angepaßt sind. Der Kehrwert der Empfindlichkeit des Strahlungssensors in Gleichung 5 wird vorzugsweise ebenfalls als Polynom dargestellt. Auf diese Weise wird die Berechnung einer vierten Wurzel oder Divisionen vermieden, sodaß die notwendigen Berechnungen auch beispielsweise von einem 4-bit Mikrocomputer sehr schnell durchgeführt werden können. Die Berechnung kann durch Verwendung von "look-up tables" zur Berechnung der Polynome weiter beschleunigt werden.
Beim erfindungsgemäßen Verfahren weist die Berechnung der Temperatur des wärmestrahlenden Körpers die folgenden Schritte auf:

1. Bestimmung der Umgebungstemperatur $T_U$:

Die Temperaturabhängigkeit des Meßwerts von gebräuchlichen Temperatursensoren läßt sich meist durch einfache Gleichungen relativ genau beschreiben, beispielsweise durch:

$$R = R_0[1+\alpha(T_U - T_0)+\beta(T_U - T_0)]^2 \qquad (8)$$

Die Parameter $R_0$, $\alpha$ und $\beta$ werden vom Hersteller des Sensors angegeben oder müssen bei der Kalibrierung des Strahlungsthermometers bestimmt werden. Eventuell kann aber auch $\beta$ und evtl. auch $\alpha$ als konstant angenommen werden. Die Umgebungstemperatur $T_U$ wird beim erfindungsgemäßen Verfahren vorzugsweise nach der folgenden Gleichung berechnet:

$$T_U = \sum_{i=0}^{k} a_i R^i \qquad (9)$$

wobei R das in einen Digitalwert gewandelte Umgebungstemperatursensorsignal ist. Mit einem Polynom 3. Grades lassen sich bei gebräuchlichen Sensoren Genauigkeiten von 1/1000 °C erreichen. Die Polynomkoeffizienten $a_i$ werden bei der Kalibrierung bestimmt.

2. Bestimmung einer Zwischenfunktion L bei der Umgebungstemperatur $T_U$:

Statt Gleichung 3 wird erfindungsgemäß eine Zwischenfunktion berechnet, die vorzugsweise ein Polynom dritten Grades ist:

$$L(T_U) = b_3 T_U^3 + b_2 T_U^2 + b_1 T_U + b_0 \qquad (10)$$

Die Polynomkoeffizienten $b_i$ werden bei der Kalibrierung derart bestimmt, daß L(T) im interessierenden Temperaturbereich (beim Fieberthermometer beispielsweise im Bereich 0 < T < 50 °C) dem in Fig.3 dargestellten Integral möglichst nahe kommt.

3. Berücksichtigung der Temperaturabhängigkeit der Empfindlichkeit des Strahlungssensors:

Um eine eventuelle Temperaturabhängigkeit der Strahlungssensorempfindlichkeit zu berücksichtigen und die Division durch S zu vermeiden, wird bei einer bevorzugten Ausgestaltung des erfindungsgemäßen Verfahrens S in Gleichung 5 substituiert durch:

$$\frac{1}{S} = \sum_{i=0}^{l} d_i (T_U - T_0)^i \qquad (11)$$

Die Polynomkoeffizienten $d_1$ werden bei der Kalibrierung bestimmt. Bei gebräuchlichen Strahlungssensoren ist die Berücksichtigung der Temperaturabhängigkeit durch ein Polynom 1. Grades ausreichend. Falls die Temperaturabhängigkeit bekannt ist, können die Parameter $d_i$ als Konstante eingesetzt werden. Zur Kalibrierung der Empfindlichkeit des Strahlungssensors ist dann nur die Bestimmung von $d_0$ notwendig.

4. Berechnung der Strahlungstemperatur $T_s$:

Die Strahlungstemperatur des Körpers $T_s$ wird unter Verwendung der Gleichung 5 und obiger Zwischenfunktion L erfindungsgemäß folgendermaßen berechnet:

$$L(T_S) = U \sum_{i=0}^{l} d_i (T_U - T_0)^i + \sum_{i=0}^{m} b_i T_U{}^i \qquad\qquad (12)$$

Nicht nur die Zwischenfunktion L(T) sondern auch ihre Umkehrfunktion T(L) läßt sich als Polynom darstellen, beispielsweise als Polynom 3. Ordnung:

$$T_S = \sum_{i=0}^{m} c_i L^i \qquad\qquad (13)$$

wobei:

L Zwischenfunktion
U Strahlungssensorsignal, in Digitalwert gewandelt
$T_U$ absolute Umgebungstemperatur in K
$T_S$ Temperatur des Meßobjekts in °C
$T_0$ Referenztemperatur
$b_i$, $c_i$, $d_i$ Polynomkoeffizienten

Die Parameter $b_i$ und $c_i$ sind nur abhängig von den optischen Eigenschaften $\varepsilon(\lambda)$, $\tau(\lambda)$ und $s(\lambda)$ und lassen sich daher bei bekannten optischen Eigenschaften berechnen. Alternativ ist eine experimentelle Bestimmung möglich. Auch bei Verwendung von Kanten- oder Bandfiltem sind auch hier Polynome 3. Grades meistens ausreichend. Bei der Näherung der in Abb. 3 dargestellten Integrale durch Polynome 3. Grades ergeben sich Fehler im Bereich von 2/1000 °C.

Das oben beschriebene Berechnungsverfahren (Gleichungen 10 bis 13) hat folgende Vorteile:

Die Strahlungstemperatur kann je nach Polynomgrad beliebig genau berechnet werden, insbesondere auch bei Verwendung von optischen Filtern zur Ausblendung von unerwünschten Wellenlängenbereichen oder bei selektiven Sensorempfindlichkeiten.

Die Kalibrierung eines Thermometers, das das beschriebene Berechnungsverfahren verwendet, beeinflußt nur sehr wenige Parameter. Zur Kalibrierung der Empfindlichkeit des Strahlungssensors ist beispielsweise nur die Änderung eines Parameters notwendig.

Bei Verwendung anderer optischer Filter oder anderer Sensoren ist nur die Änderung weniger Parameter notwendig, das Berechnungsverfahren bleibt gleich.

**Patentansprüche**

**1.** Verfahren zur Berechnung der Temperatur eines Körpers aus Signalen eines Strahlungsund eines Umgebungstemperatursensors, insbesondere zur Verwendung in einem Strahlungsthermometer, insbesondere einem Strahlungsfieberthermometer, mit den folgenden Schritten:

Bestimmung der Umgebungstemperatur ($T_U$) anhand eines vom Umgebungstemperatursensor gelieferten Signals (R);
Berechnung einer Zwischenfunktion (L($T_U$)) bei der bestimmten Umgebungstemperatur ($T_U$),
Berechnung der Zwischenfunktion (L($T_S$)) für die Temperatur des Körpers ($T_S$) anhand des vom Strahlungssensor gelieferten Signals (U) und der Zwischenfunktion (L($T_U$)) bei der berechneten Umgebungstemperatur ($T_U$),
Berechnung der Temperatur des Körpers ($T_S$) unter Verwendung der Umkehrfunktion der Zwischenfunktion (L($T_S$)),

wobei die Zwischenfunktion (L) und ihre Umkehrfunktion Polynome sind.

**2.** Verfahren nach Anspruch 1, **dadurch gekennzeichnet, daß**
die Zwischenfunktion (L) an die optischen Eigenschaften des Strahlungsthermometers angepaßte Parameter enthält.

**3.** Verfahren nach Anspruch 1 oder 2, **dadurch gekennzeichnet, daß**
die Zwischenfunktion (L) und/oder ihre Umkehrfunktion Polynome dritten Grades sind.

**4.** Verfahren nach einem der vorhergehenden Ansprüche, **dadurch gekennzeichnet, daß**
der Kehrwert der temperaturabhängigen Empfindlichkeit des Strahlungssensors als Polynom in die Berechnung der Strahlungstemperatur ($T_S$) eingeht.

**5.** Verfahren nach einem der vorhergehenden Ansprüche, **dadurch gekennzeichnet, daß**
die Bestimmung der Umgebungstemperatur ($T_U$) durch Berechnung eines Polyoms erfolgt, in das das Signal (R) und die temperaturabhängigen Parameter des verwendeten Umgebungstemperatursensors eingehen.

**6.** Strahlungsthermometer, insbesondere Strahlungsfieberthermometer, mit einem Umgebungstemperatursensor und einem Strahlungssensor sowie einem Rechenwerk, **gekennzeichnet durch** das Verfahren nach einem der vorhergehenden Ansprüche zur Berechnung der Temperatur ($T_S$) eines wärmestrahlenden Körpers.

**Claims**

**1.** A method of computing the temperature of a body from the signals of a radiation and an ambient temperature sensor, particularly for use in a radiation thermometer, in particular a clinical radiation thermometer, comprising the steps of:

determining the ambient temperature ($T_U$) using a signal (R) supplied by the ambient temperature sensor;

computing an intermediate function ($L(T_U)$) at the ambient temperature $T_U$ determined;

computing the intermediate function ($L(T_S)$) for the body temperature ($T_S$) using the signal (U) supplied from the radiation sensor and the intermediate function ($L(T_U)$) at the computed ambient temperature ($T_U$);

computing the body temperature ($T_S$) using the inverse function of the intermediate function ($L(T_S)$),

where the intermediate function (L) and its inverse function are polynomials.

**2.** The method as claimed in claim 1, **characterized in that** the intermediate function (L) contains parameters adjusted to the optical properties of the radiation thermometer.

**3.** The method as claimed in claim 1 or 2, **characterized in that** the intermediate function (L) and/or its inverse function are third-degree polynomials.

**4.** The method as claimed in any one of the preceding claims, **characterized in that** the reciprocal value of the temperature-dependent sensitivity of the radiation sensor enters the computation of the radiation temperature ($T_S$) as a polynomial.

**5.** The method as claimed in any one of the preceding claims, **characterized in that** determination of the ambient temperature ($T_U$) is by computation of a polynomial in which the signal (R) and the temperature-dependent parameters of the ambient temperature sensor utilized enter.

**6.** A radiation thermometer, in particular a clinical radiation thermometer, with an ambient temperature sensor and a radiation sensor as well as a computing unit, **characterized by** the method of any one of the preceding claims for computing the temperature ($T_S$) of a heat radiating body.

**Revendications**

1. Procédé de calcul de la température d'un corps à partir de signaux d'un capteur de rayonnement et d'un capteur de température ambiante, en particulier en vue de l'utilisation dans un thermomètre à rayonnement, en particulier un thermomètre médical, **caractérisé par** les étapes suivantes :

   détermination de la température ambiante ($T_U$) à l'aide d'un signal (R) délivré par le capteur de température ambiante ;
   calcul d'une fonction intermédiaire ($L(T_U)$) dans le cas de la température ambiante déterminée ($T_U$),
   calcul de la fonction intermédiaire ($L(T_S)$) pour la température du corps ($T_S$) à l'aide du signal U délivré par le capteur de rayonnement et de la fonction intermédiaire ($L(T_U)$) dans le cas de la température ambiante calculée ($T_U$),
   calcul de la température du corps ($T_S$) par utilisation de la fonction inverse de la fonction intermédiaire ($L(T_S)$), la fonction intermédiaire (L) et sa fonction inverse étant des polynômes.

2. Procédé selon la revendication 1, **caractérisé en ce que** la fonction intermédiaire (L) contient des paramètres adaptés aux propriétés optiques du thermomètre à rayonnement.

3. Procédé selon la revendication 1 ou 2, **caractérisé en ce que** la fonction intermédiaire (L) et/ou sa fonction inverse sont des polynômes du troisièmes degré.

4. Procédé selon l'une des revendications précédentes, **caractérisé en ce que** l'inverse de la sensibilité en fonction de la température du capteur de rayonnement intervient en tant que polynôme dans le calcul de la température de rayonnement ($T_S$).

5. Procédé selon une des revendications précédentes, **caractérisé en ce que** la détermination de la température ambiante ($T_U$) s'effectue par calcul d'un polynôme dans lequel interviennent le signal (R) et les paramètres fonctions de la température du capteur de température ambiantes utilisé.

6. Thermomètre à rayonnement, en particulier thermomètre médical à rayonnement, équipé d'un capteur de température ambiante et d'un capteur de rayonnement ainsi que d'un calculateur, **caractérisé par** le procédé selon une des revendications précédentes, en vue du calcul de la température ($T_S$) d'un corps rayonnant de la chaleur.

IR-durchlässiges Fenster

Gehäuse, Meßspitze

IR-Lichtleiter

Sensorfenster

Sensorgehäuse

Strahlungssensorelement

Umgebungstemperatursensor

Fig. 1

Fig. 2

Fig. 3